# EUROPÄISCHE PATENTSCHRIFT

(11) **EP 2 359 036 B1**
(45) Veröffentlichungstag und Bekanntmachung des Hinweises auf die Patenterteilung: **23.03.2016**
(21) Anmeldenummer: 09806173.2
(22) Anmeldetag: 16.11.2009
(51) Int. Cl.: F16J 15/32, F16J 15/16

(54) **DICHTELEMENT MIT PASSIVEM AKTIVIERUNGSELEMENT**
SEALING ELEMENT
ÉLÉMENT D'ÉTANCHÉITÉ

(30) Priorität: 19.11.2008 DE 102008058087
(43) Veröffentlichungstag der Anmeldung: 24.08.2011
(73) Patentinhaber: SEW-EURODRIVE GmbH & Co. KG, 76646 Bruchsal (DE)
(72) Erfinder: GRAF, Hans, 68165 Mannheim (DE)
(74) Vertreter: Tüngler, Eberhard
(86) Internationale Anmeldenummer: PCT/EP2009/008146
(87) Internationale Veröffentlichungsnummer: WO 2010/057606

(56) Entgegenhaltungen:
- EP-A1- 2 151 611
- WO-A1-02/23070
- DE-A1- 10 125 099
- DE-A1- 19 748 631
- JP-A- 60 192 167
- US-A- 4 112 283
- US-A- 4 844 485

## Beschreibung

Die Erfindung betrifft ein Dichtelement.

Aus der DE 101 12 397 A1 ist ein Dichtring bekannt, der aus einer Kombination mehrerer Dichtlippen besteht. Im Regelfall ist eine einzige Dichtlippe aktiv. Wird durch einen Sensor eine Leckage festgestellt, so wird durch einen Mechanismus eine weitere Dichtlippe aktiv "zugeschaltet" und das Leck nach außen geschlossen.

Aus der gattungsbildenden 101 25 099 A1 ist ein Dichtelement mit einer zuschaltbaren weiteren Dichtlippe bekannt.

Aus der JP 60 192167 A ist eine alternative Lösung bekannt, bei der ein Fluidauslauf vorgesehen ist.

Aus der EP 2 151 611 A ist ein Dichtelement für eine Wellenabdichtung bekannt, wobei ein quellfähiges Material zur Bewegung in einer Vorzugsrichtung vorgesehen ist.

Der Erfindung liegt daher die Aufgabe zugrunde, ein Dichtelement in kostengünstiger Weise weiterzubilden.

Erfindungsgemäß wird die Aufgabe bei dem Dichtelement nach den in Anspruch 1 bzw. 6, bei der Anordnung nach den in Anspruch 9, bei dem Gehäuse bzw. Getriebegehäuse nach den in Anspruch 10, oder bei dem Verfahren nach den in Anspruch 11 angegebenen Merkmalen gelöst.

Wichtige Merkmale der Erfindung bei dem Dichtelement nach Anspruch 1 sind, dass das Dichtelement für eine Wellenabdichtung, insbesondere Wellendichtring, eine Dichtlippe, welche an einer Wellendichtfläche anliegt, umfasst wobei die Dichtlippe einen Innenraum von einem Außenraum trennt, wobei ein Aktivierungselement am Dichtelement im Außenraum angeordnet ist, so dass ein Auslauf bei einer Undichtheit der Dichtlippe mit dem Aktivierungselement zusammenwirkt, wodurch ein weiteres Dichtmittel passiv an die Wellendichtfläche anlegbar ist. Von Vorteil dabei ist, dass die weitere Abdichtung nach einer Leckage der Dichtlippe rein passiv und vollkommen automatisch ohne einen weiteren Sensor erfolgt. Unter Auslauf wird hierbei ein Anteil des im Innenraum vorhandenen Schmiermittels verstanden welcher zwischen dem Dichtelement und der Welle austritt, zum Beispiel im Fall einer Leckage der Dichtlippe.

Bei einem kennzeichnenden Merkmal des Dichtelementes gemäss der Erfindung ist das Aktivierungselement ein lipophiler hydrophober Absorber, welcher zwischen Wellendichtfläche und Wellendichtring am Wellendichtring angeordnet ist und durch Aufnahme des Auslaufs durch den Absorber durch einen Volumenzuwachs des Absorbers ein weiteres Dichtmittel abdichtend an die Wellendichtfläche anlegbar ist. Von Vorteil dabei ist, das der Auslauf solange aufgenommen wird, bis die Welle wieder abgedichtet ist und somit kein Auslauf, bzw. Schmiermittel, in den Außenraum auf die andere Seite des Dichtelementes, bzw. die Umwelt gelangt.

Bei einem weiteren kennzeichnenden Merkmal ist das weitere Dichtmittel der Absorber selbst. Von Vorteil dabei ist, dass keine weiteren Teile benötigt werden.

Bei einem weiteren kennzeichnenden Merkmal ist der Absorber in einem Bereich zwischen der Dichtlippe und einer Staublippe angeordnet und beim Volumenzuwachs hebt der Absorber die Staublippe von der Wellendichtfläche ab. Von Vorteil dabei ist, dass das Versagen der Dichtlippe von außerhalb des Gehäuses an dem Dichtelement erkennbar ist.

Bei einer weiteren Ausführungsform ist eine weitere Dichtlippe von der Wellendichtfläche beabstandet und von dem Aktivierungselement bei Volumenzuwachs an die Wellendichtfläche dichtend andrückbar. Von Vorteil dabei ist, dass die weitere Dichtlippe zum abdichten optimiert ist.

Bei einem weiteren kennzeichnenden Merkmal des Dichtelementes gemäss der Erfindung ist das Aktivierungselement zwischen der Dichtlippe und einer weiteren Dichtlippe angeordnet und das Aktivierungselement hebt die weitere Dichtlippe von der Wellendichtfläche ab, wobei das Aktivierungselement eine öllösliche Beschichtung am Wellendichtring ist. Von Vorteil dabei ist, dass die weitere Dichtlippe automatisch durch die vorhanden Vorspannung im Material abdichtend an die Welle gedrückt wird, sobald sich die Beschichtung auf Grund eines Auslaufs auflöst.

Bei einem gemäss Anspruch 10 wird ein oben beschriebenes Dichtelement verwendet. Von Vorteil dabei ist, dass eine Wellendurchführung des Gehäuses sicher abgedichtet ist.

Bei einem Getriebe mit einem Gehäuse gemäss Anspruch 10 wird ein erfindungsgemäßes Dichtelement verwendet.

Bei dem Verfahren zur sicheren Abdichtung einer Welle durch eine Durchführung einer Gehäusewand eines Gehäuses, wird zwischen der Welle und dem Gehäuse drehfest zum Gehäuse ein Dichtring / Dichtelement gemäss Anspruch 1 angeordnet, dessen Dichtlippe die Welle gegen das Gehäuse abdichtet, wobei das Dichtelement eine Innenseite zu einem schmiermittelbefüllten Innenraum des Gehäuses und eine Außenseite aufweist, wobei eine Dichtlippe mit einer Dichtfläche der Welle abdichtend zusammenwirkt, wobei am Dichtring an der Außenseite ein Aktivierungselement angeordnet wird, wobei bei einer Leckage des Dichtelementes, insbesondere der Dichtlippe ein Auslauf mit dem Aktivierungselement zusammenwirkt, wobei das Aktivierungsmittel ein weiteres Dichtmittel passiv an die Wellendichtfläche anlegt. Von Vorteil dabei ist, dass eine Wellendurchführung einfach und sicher abdichtbar ist.

Bei einer bevorzugten Ausführungsform des Verfahrens löst sich das Aktivierungsmittel, vorzugsweise als lipohile, hydrophobe Beschichtung, durch Kontakt mit dem Auslauf auf oder quillt auf.

Bei einem Gehäuse ist zur Abdichtung gegen ein weiteres Element, insbesondere Welle oder Achse, ein Dichtelement an einem Gehäuseteil angeordnet, wobei an einer ersten Seite des Dichtelements eine Flüssigkeit, insbesondere Schmierstoff, wie Schmieröl oder dergleichen, vorgesehen ist,
wobei von der ersten Seite an eine andere Seite austretende oder ausgetretene Flüssigkeit von einem Materialbereich des Dichtelements aufnehmbar ist und beim Aufnehmen ein Volumenzuwachs dieses Materialbereichs bewirkt ist, der
- ein Zuschalten einer Lippe,
- ein Anlegen einer Lippe
- ein Verringern des Spaltes, insbesondere Dichtspaltes, zwischen Dichtelement und abzudichtendem Element und/oder
- ein Erhöhen eines Anpressdrucks einer Lippe gegen das abzudichtende weitere Element bewirkt.

Von Vorteil ist dabei, dass im Falle einer nachlassenden Abdichtung durch die Dichtlippe austretendes Schmiermittel von der Beschichtung aufgenommen wird, diese zum Quellen bringt, wodurch die Staublippe derart auf die Welle angepresst wird, dass die Abdichtung bis zum nächsten Servicetermin gewährleistet ist. Weiter ist von Vorteil, dass ein Sensor zum Feststellen einer Leckage verzichtbar ist und somit eine kostengünstige Variante erreicht ist.

Weiterer Vorteil ist, dass die Umwelt geschützt ist. Denn ausgetretener Schmierstoff wird nicht chemisch verändert oder in chemische Verbindungen eingebracht sondern aufgesogen und somit ein Aufquellen bewirkt, das dem Austreten des Schmierstoffs entgegenwirkt. Das Zuschalten oder Herstellen der Dichtung ist somit automatisch bewirkt und es tritt kein Schmierstoff in die Umwelt.

Bei einer vorteilhaften Ausgestaltung besteht die Beschichtung aus Aktivkohle.

Von Vorteil ist dabei, dass die Beschichtung besonders saugfähig und kostengünstig ist.

Bei einer vorteilhaften Ausgestaltung ist die Beschichtung aus Mikropartikeln mit Dimethyldichlorsilan behandelt. Von Vorteil ist dabei, dass für die aufzunehmende Flüssigkeit eine ausreichende Anzahl von Bindungsorten auf den Partikeln der Beschichtung vorhanden ist.

Bei einer vorteilhaften Ausgestaltung ist die Beschichtung aus mehreren unterschiedlichen Materialschichten aufgebaut. Von Vorteil ist dabei, dass die Flüssigkeit durch eine erste Schicht nur hindurchgeleitet wird, um dann in einer weiteren Schicht deponiert zu werden, wo sie die aussteifende Funktion übernimmt, die notwendig ist, um die Staublippe an die Welle anzupressen.

Bei einer vorteilhaften Ausgestaltung sind die der Flüssigkeit zugewandten Materialschichten saugend und flüssigkeitsleitend ausgebildet und die dem Dichtelement zugewandten Materialschichten sind derart ausgebildet, dass die Flüssigkeit dort deponierbar ist.

Wichtige Merkmale der Erfindung bei dem Gehäuse sind, dass eine Dichtanordnung vorgesehen ist, bei der an einem Gehäuse ein Dichtelement angeordnet ist, das zur Abdichtung gegen ein weiteres Element, insbesondere Welle oder Achse, vorgesehen ist, wobei an einer ersten Seite des Dichtelements eine Flüssigkeit, insbesondere Schmierstoff, wie Schmieröl oder dergleichen, vorgesehen ist,
wobei von von der ersten Seite an eine andere Seite des Materialbereichs des Dichtelements austretender oder ausgetretener Flüssigkeit eine chemische Reaktion zwischen der austretenden Flüssigkeit und dem Materialbereich bewirkbar ist, der
- ein Zuschalten einer Lippe,
- ein Anlegen einer Lippe
- ein Verringern des Spaltes, insbesondere Dichtspaltes, zwischen Dichtelement und abzudichtendem Element und/oder
- ein Erhöhen eines Anpressdrucks einer Lippe gegen das abzudichtende weitere

Element bewirkt.

Von Vorteil ist dabei, dass durch die chemische Reaktion eine Veränderung der Anpresskraft der Staublippe auf die drehende Welle erreichbar ist, wodurch eine Abdichtung erzielbar ist. Dabei sind die chemischen Reaktionspartner derart wählbar, dass das chemische Endprodukt der Reaktion umweltfreundlich entsorgbar oder recyclebar ist.

Bei einer vorteilhaften Ausgestaltung führt die Reaktion zwischen austretender Flüssigkeit und Beschichtung zu einer Erhöhung der Anpresskraft auf die Dichtlippe. Von Vorteil ist dabei, dass die Dichtlippe selbst auf die drehende Welle anpressbar ist, wodurch eine eventuelle Leckage abdichtbar wird.

Bei einer vorteilhaften Ausgestaltung sind Anzeigemittel vorhanden, die den erhöhten Anpressdruck auf die Staublippe und somit die Leckage an der Dichtlippe von Außen sichtbar machen. Von Vorteil ist dabei, dass die Leckage am Dichtring von Außen erkennbar ist und der Dichtring beim nächsten Serviceintervall gewechselt werden kann.

Bei einer vorteilhaften Ausgestaltung ist ein Sensor vorgesehen, der den erhöhten Anpressdruck auf die Staublippe und somit die Leckage an der Dichtlippe erfasst und einer übergeordneten Steuerung mitteilt. Von Vorteil ist dabei, dass die Überwachung der Abdichtung durch den Dichtring automatisiert erfolgt.

Weitere Vorteile ergeben sich aus den Unteransprüchen.

### Bezugszeichenliste

1 Gehäuse
2 Welle
3 Dichtring / Dichtelement
4 Flüssigkeitsseite
5 Dichtlippe
6 Staublippe
7 Schlauchfeder
8 Metallring
9 Aktivierungselement
10 weiteres Aktivierungselement

Die Erfindung wird nun anhand von Ausführungsbeispielen mit Bezugnahme auf die Zeichnung näher erläutert. Es zeigen rein schematisch:
Fig. 1: einen Schnitt durch ein erfindungsgemäßes Dichtelement; und
Fig. 2: einen Schnitt durch eine alternative Ausführungsform eines erfindungsgemäßen Dichtelementes.

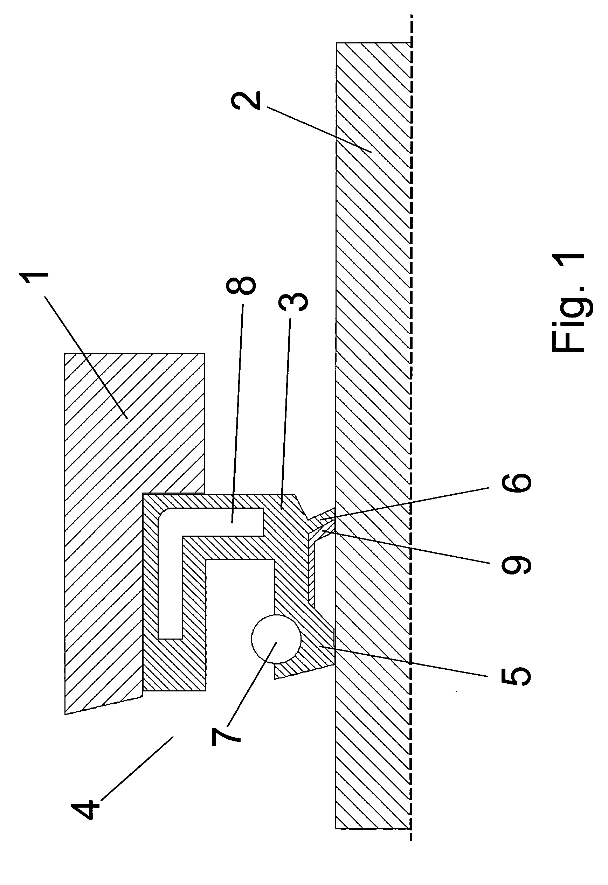

In der Figur 1 ist ein erfindungsgemäßes Dichtelement im Schnitt gezeigt.

Die Figur 1 zeigt eine drehbare Welle 2, die in einem Gehäuse 1 gelagert ist. Die Welle 2 durchdringt eine Gehäusewand des Gehäuses durch eine Ausnehmung eines Gehäuseteils des Gehäuses 2. Ein Innenraum des Gehäuses 1 ist mit einer Flüssigkeit, vorzugsweise einem Schmiermittel, insbesondere einem Schmieröl gefüllt. Das Schmiermittel dient der Schmierung für miteinander in Eingriff stehende Verzahnungsteile, welche im Innenraum angeordnet sind. Das Gehäuseteil ist gegenüber der Welle 2 mit einem Dichtelement, welches vorzugsweise als Dichtring 3 bzw. Wellenring gebildet ist, abgedichtet.

Der Dichtring 3 besteht aus einem Grundkörper, der durch einen Metallring 8 verstärkt ist. Die Dichtlippe 5 wird mittels der Schlauchfeder 7 an die Welle gedrückt und verhindert somit ein Austreten der Flüssigkeit. Der Druck, der durch die Schlauchfeder 7 aufgebaut wird, soll gerade so stark sein, dass die Dichtlippe 5 abdichtend auf der Welle 2 auf einer Wellendichtfläche aufliegt. Starke Reibung wird jedoch vermieden, um einen schnellen Verschleiß zu verhindern. Dadurch wird ein Auslaufen, das heißt Austreten des Schmiermittels, insbesondere Öl, aus dem Innenraum von der Flüssigkeitsseite 4 des Dichtelementes in den Außenraum auf die Außenseite des Dichtelementes verhindert.

Ist die Dichtlippe 5 verschlissen, so tritt das Schmiermittel als ein Auslauf vom Innenraum in den Außenraum. Das Schmiermittel kommt in Kontakt mit dem Aktivierungsmittel. Dadurch wird eine chemische und/oder physikalische Reaktion zwischen Aktivierungsmittel und Auslauf ausgelöst. Diese chemische und/oder physikalische Reaktion bewirkt eine erneute Abdichtung der Welle gegenüber dem Gehäuse in dem ein weiteres Dichtmittel an die Wellendichtfläche angelegt wird. Das Dichtmittel und das weitere Dichtmittel liegen abdichtend an der Wellendichtfläche an bzw. sind abdichtend an die Wellendichtfläche anlegbar.

Dies geschieht rein passiv, das heißt ohne eine Detektion des Auslaufs oder eine Zuführung von Energie von außerhalb des Dichtungselementes. Die chemische und/oder physikalische Reaktion des Aktivierungsmittels reicht aus, um ein erneutes abdichtend der Welle gegenüber dem Gehäuse bewirkt.

Bei unterschiedlichen Ausführungsformen sind unterschiedliche chemische und/oder physikalische Reaktion des Aktivierungsmittels vorgesehen, wie zum Beispiel Auflösen, Aufquellen, Aufsaugen, Adhäsion, chemische Bindung.

Das Aktivierungsmittel ist vorzugsweise als ein Materialbereich des Dichtelementes oder am Dichtelement, insbesondere als Beschichtung 9 am Dichtelement ausgeführt.

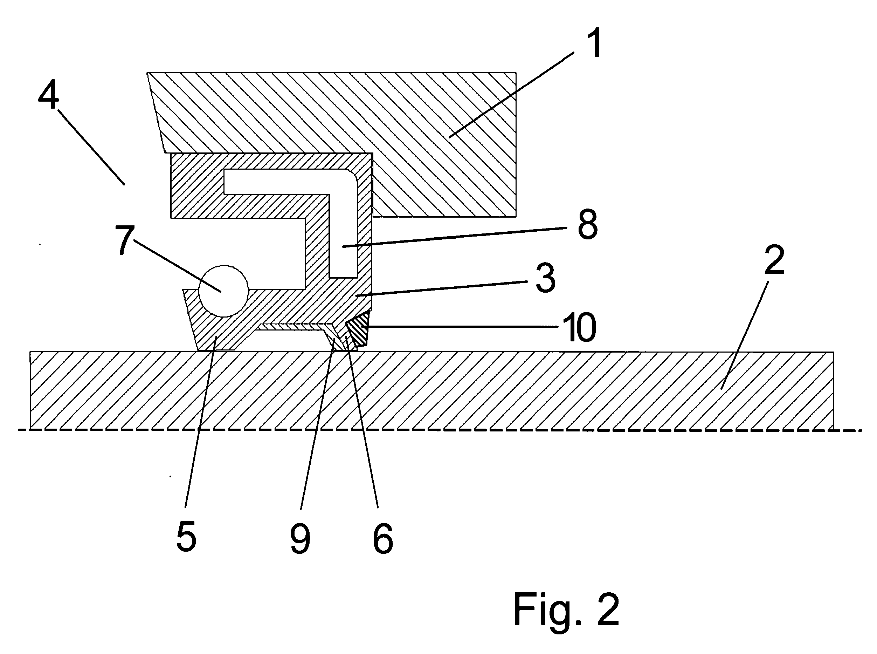

Als zusätzlichen Schutz enthält der in den Figuren 1 und 2 gezeigte Dichtring 3 noch eine Staublippe 6, die verhindert, dass Partikel an die Dichtlippe 5 gelangen, die diese zerstören könnten.

Entsprechend einer bevorzugten Ausführungsform ist in dem Raum zwischen der Dichtlippe 5 und der Staublippe 6 ein Aktivierungsmittel als Beschichtung 9 vorgesehen.

Die Beschichtung 9 besteht bei einer weiteren Ausführungsform aus direkt auf die Oberfläche des Dichtrings 3 aufgebrachter Aktivkohle, die so strukturiert ist, dass die kapillare Sogwirkung des porösen Materials die an der Oberfläche anstehende Flüssigkeit aufgrund der Oberflächenspannung in die Poren im Innern der Aktivkohle gezogen werden.

Die Anreicherung der Flüssigkeit im Innern der Aktivkohle bewirkt ein Quellen der Beschichtung 9. Der durch das Quellen bedingte Volumenzuwachs der Beschichtung 9 bewirkt ein Druck auf die Staublippe 6. Die Staublippe 6 wird gegen die Wellendichtfläche gedrückt und dichtet die Welle 2 gegen das Gehäuseteil ab. Dies verhindert ein weiteres Entweichen von Flüssigkeit und stoppt den Auslauf.

Da die Staublippe 6 beim Einbau des Dichtringes 3 eine Vorspannung erhält, die genau so stark ist, dass ein Abrieb durch die drehende Welle verhindert ist, ein Eindringen von Staubteilchen jedoch verhindert ist, ist die zusätzliche Kraft, die notwendig ist, um die für die Abdichtung gegen unerwünschtes Austreten von Flüssigkeit notwendige Anpresskraft zu erreichen, sehr gering. Diese geringe Anpresskraft ist durch quellende Aktivkohle oder eine vergleichbare Beschichtung erreichbar.

In einer alternativen Ausführungsform ist statt der Staublippe 6 eine weitere Dichtlippe am Dichtring 3 angeordnet. Die weitere Dichtlippe wird, wie oben beschrieben die Staublippe 6, an die Wellendichtfläche angedrückt. Die weitere Dichtlippe ist aber besser zum Abdichten geeignet.

In einer weiteren Ausführungsform bildet die Beschichtung 9 eine öllösliche aber in Wasser unlösliche Schicht. Die Beschichtung 9 bewirkt ein Abheben der weiteren Dichtlippe oder der Staublippe von der Welle 2 bzw. der Wellendichtfläche. Die Beschichtung 9 bewirkt und erhält ein Wegbiegen der weiteren Dichtlippe oder der Staublippe 6 von der Welle 2. Ist die Dichtlippe undicht tritt Schmiermittel aus und löst die Beschichtung 9 auf. Durch die Eigenspannung des Materials des Dichtrings 3 wird die weitere Dichtlippe oder die Staublippe 6 an die Welle 2 bzw. an die Wellendichtfläche gedrückt und dichtet das Gehäuse erneut ab.

Bei einer weiteren Ausführungsform ist das Aktivierungselement selbst das abdichtende Element. Es ist zum Beispiel als Materialbereich oder Beschichtung 9 im Außenraum vor der Dichtlippe 5 angeordnet. Tritt ein Auslauf auf, so saugt das Aktivierungsmittel den Auslauf auf und quillt so stark auf, dass es selbst gegen die Welle gedrückt ist.

Weist das Aktivierungselement noch eine Signalfarbe auf, so ist das Auftreten der Leckage direkt von Außerhalb des Gehäuses 2 sichtbar. Falls der Dichtring 3 auch eine Staublippe 6 aufweist, so quillt das Aktivierungselement so stark auf, dass es die Staublippe 6 von der Welle weg drückt und somit sichtbar wird.

In der in Figur 2 gezeigten Ausführungsform ist noch ein weiteres Aktivierungselement 10 gezeigt, welches in Kombination mit der Beschichtung 9 oder allein am Dichtring 3 angeordnet ist. Das weitere Aktivierungselement bewirkt bei Kontakt mit dem Auslauf, bei undichter Dichtlippe 5, ein Andrücken der Staublippe 5 oder alternativ einer weiteren Dichtlippe an die Welle bzw. die Wellendichtfläche. Dazu quillt zum Beispiel das weitere Aktivierungselement 10 einfach bei Kontakt mit dem Schmiermittel auf.

Bei einer weiteren Ausführungsform ändert das weitere Aktivierungsmittel 10 bei Kontakt mit dem Auslauf seine sichtbare Farbe, insbesondere die vom menschliche Auge sichtbare Farbe. Bevorzugterweise ändert sich die Farbe von einer unscheinbaren Farbe in eine Signalfarbe, so dass die Leckage des Dichtrings 3 einfach beobachtbar ist.

Das weitere Aktivierungsmittel und die Beschichtung 9 beziehungsweise das Aktivierungsmittel lassen sich auch in Kombination, wie in Figur 2 gezeigt an einem Dichtring 3 anordnen.

Das Aktivierungsmittel ist aus einem hydrophoben, lipophilen Material, damit die chemische und/oder physikalische Reaktion nicht schon mit der Luftfeuchtigkeit oder auftretendem Schwitzwasser ausgelöst wird. Da die Schmiermittel meist auf Basis von mineralische, synthetischen oder biologische Ölen aufgebaut sind, ist ein sicheres Aktivieren des Aktivierungsmittels nur bei einer Leckage möglich.

Hydrophobe, lipophile Materialien lassen sich vorzugsweise durch eine Silanisierung, Silylierung oder Silikonisierung mit einem Silan, insbesondere Alkylsilan wie zum Beispiel Dichlordimethylsilan realisieren.

Bei einer bevorzugten Ausführungsform weist das Aktivierungsmittel ein silikonisiertes oder silanisiertes Filterelement auf, welches ein quellendes Aufsaugelement umgibt. Beispielsweise umgibt eine silikonisierte Membran oder Filterpapier einen ölaufsaugenden Schwamm.

## Patentansprüche

1. Dichtelement für eine Wellenabdichtung, insbesondere Wellendichtring, umfassend eine Dichtlippe (5), welche in einem eingebauten Zustand des Dichtelementes an einer Wellendichtfläche anliegt,
wobei die Dichtlippe (5) einen Innenraum von einem Außenraum trennt, wobei ein Aktivierungselement (9) am Dichtelement im Außenraum angeordnet ist, so dass ein Auslauf bei einer Undichtheit der Dichtlippe (5) mit dem Aktivierungselement (9) zusammenwirkt, wodurch ein weiteres Dichtmittel passiv an die Wellendichtfläche anlegbar ist,
**dadurch gekennzeichnet, dass** -
d as Aktivierungselement (9) ein lipophiler hydrophober Absorber ist, welcher zwischen Wellendichtfläche und Wellendichtring am Wellendichtring angeordnet ist und durch ein Volumenzuwachs des Absorbers, welcher von einer Aufnahme eines Anteils des Auslaufs im Absorber bewirkt ist, das weitere Dichtmittel abdichtend an die Wellendichtfläche anlegbar ist und/oder angelegt wird, insbesondere wobei mittels Aufnahme des Anteils des Auslaufs das Aktivierungselement (9) seine sichtbare Farbe ändert, und dass -
d as weitere Dichtmittel der Absorber selbst ist,
wobei der Absorber in einem Bereich zwischen der Dichtlippe (5) und einer Staublippe (6) des Dichtelementes angeordnet ist und Volumenzuwachs die Staublippe (6) von der Wellendichtfläche abhebt.

2. Dichtelement nach Anspruch 1,
**dadurch gekennzeichnet, dass**
eine weitere Dichtlippe (5) als weiteres Dichtmittel von der Wellendichtfläche beabstandet ist und von dem Aktivierungselement (9) bei Volumenzuwachs an die Wellendichtfläche dichtend andrückbar ist.

3. Dichtelement nach einem der Ansprüche 1 bis 2,
**dadurch gekennzeichnet, dass**
das Aktivierungsmittel ein silikonisiertes oder silanisiertes Filterelement aufweist, welches ein bei einem Aufsaugen von mindestens einer Teilmenge des Auslaufs aufquellendes Material umgibt.

4. Dichtelement nach einem der vorangegangenen Ansprüche,
**dadurch gekennzeichnet, dass**
durch den Volumenzuwachs des Aktivierungsmittels ein erhöhter Anpressdruck auf die Staublippe (6) oder die Dichtlippe (5) oder eine entsprechend auf die Wellendichtfläche hin gerichtete Auslenkung der Staublippe (6) oder der Dichtlippe (5) erzeugbar ist.

5. Dichtelement nach Anspruch 4
**dadurch gekennzeichnet, dass**
die Staublippe (6) oder die Dichtlippe (5) durch diesen erhöhten Anpressdruck weiteres Austreten des Auslaufs unterbindet.

6. Dichtelement für eine Wellenabdichtung, insbesondere Wellendichtring, umfassend eine Dichtlippe (5), welche in einem eingebauten Zustand des Dichtelementes an einer Wellendichtfläche anliegt,
wobei die Dichtlippe (5) einen Innenraum von einem Außenraum trennt,
wobei ein Aktivierungselement (9) am Dichtelement im Außenraum angeordnet ist, so dass ein Auslauf bei einer Undichtheit der Dichtlippe (5) mit dem Aktivierungselement (9) zusammenwirkt, wodurch ein weiteres Dichtmittel passiv an die Wellendichtfläche anlegbar ist,
**dadurch gekennzeichnet, dass**
das weitere Dichtmittel eine weitere Dichtlippe (5) ist, dass
das Aktivierungselement (9) zwischen der Dichtlippe (5) und einer weiteren Dichtlippe (5) angeordnet ist und das Aktivierungselement (9) die weitere Dichtlippe (5) von der Wellendichtfläche abhebt,
wobei das Aktivierungselement (9) eine im Schmiermittel lösliche, insbesondere Öl-lösliche Beschichtung am Wellendichtring ist.

7. Dichtelement nach einem der vorangegangenen Ansprüche,
**dadurch gekennzeichnet, dass**
das Aktivierungsmittel aus silanisierten Mikropartikeln besteht.

8. Dichtelement nach einem der vorangegangenen Ansprüche,
**dadurch gekennzeichnet, dass**
der Materialbereich und/oder die Beschichtung aus mehreren unterschiedlichen Materialschichten aufgebaut ist.

9. Anordnung zum Abdichten eines Teils gegen eine Welle (2) mit einem Dichtelement nach einem der Ansprüche 1 bis 8.

10. Gehäuse (1), insbesondere ein Getriebegehäuse, mit einem Dichtelement nach einem der vorangegangenen Ansprüche 1 bis 8.

11. Verfahren zur Abdichtung einer Welle (2) durch eine Durchführung einer Gehäusewand eines Gehäuses (1), wobei zwischen der Welle (2) und dem Gehäuse (1) drehfest zum Gehäuse (1) ein Dichtelement nach einem der Ansprüche 1 bis 8 angeordnet wird, das Dichtelement eine Innenseite zu einem schmiermittelbefüllten Innenraum des Gehäuses (1) und eine der Innenseite gegenüberliegende Außenseite aufweist, wobei eine Dichtlippe (5) des Dichtelementes mit einer Dichtfläche der Welle (2) abdichtend zusammenwirkt,
**dadurch gekennzeichnet, dass**
am Dichtelement an der Außenseite ein Aktivierungselement (9) angeordnet wird,
wobei bei einer Leckage des Dichtelementes, insbesondere der Dichtlippe (5), ein Anteil eines Auslaufs mit dem Aktivierungselement (9) in Wirkverbindung tritt,
wodurch das Aktivierungsmittel ein weiteres Dichtmittel passiv an die Wellendichtfläche anlegt.

12. Verfahren nach Anspruch 11,
**dadurch gekennzeichnet, dass**
das Aktivierungsmittel, vorzugsweise eine lipohile, hydrophobe Beschichtung oder Materialbereich, durch Kontakt mit dem Auslauf sich auflöst oder aufquillt.

## Claims

1. A sealing element for a shaft sealing means, in particular shaft sealing ring, comprising a sealing lip (5) which in an installed state of the sealing element lies against a shaft sealing surface,
wherein the sealing lip (5) separates an inner space from an outer space,
wherein an activation element (9) is arranged on the sealing element in the outer space, so that a leak, in the event of the sealing lip (5) leaking, cooperates with the activation element (9), as a result of which a further sealing means can be applied passively against the shaft scaling surface,
**characterised in that**
the activation element (9) is a lipophilic hydrophobic absorber which is arranged between the shaft sealing surface and the shaft sealing ring on the shaft sealing ring and, by means of an increase in volume of the absorber which is brought about by absorption of a portion of the leak in the absorber, the further sealing means can be applied and/or is applied in sealing manner against the shaft sealing surface,
in particular the activation element (9) changing its visible colour by means of absorbing the portion of the leak, and **in that**
the further sealing means is the absorber itself,
the absorber being arranged in a region between the sealing lip (5) and a dust lip (6) of the sealing element and the dust lip (6) lifting off from the shaft sealing surface upon the increase in volume.

2. A sealing element according to Claim 1,
**characterised in that**
a further sealing lip (5) as further sealing means is spaced apart from the shaft sealing surface and can be pressed in sealing manner against the shaft sealing surface by the activation element (9) upon an increase in volume.

3. A sealing element according to one of Claims 1 to 2,
**characterised in that**
the activation means has a siliconised or silanised filter element which surrounds a material which swells up on absorbing at least a partial amount of the leak.

4. A sealing element according to one of the preceding claims,
**characterised in that**
owing to the increase in volume of the activation means an increased contact pressure on the dust lip (6) or the sealing lip (5) or a deflection of the dust lip (6) or the sealing lip (5) directed correspondingly towards the shaft sealing surface can be generated.

5. A sealing element according to Claim 4,
**characterised in that**
the dust lip (6) or the sealing lip (5) prevents further emergence of the leak owing to this increased contact pressure.

6. A sealing element for a shaft sealing means, in particular shaft sealing ring, comprising a sealing lip (5) which in an installed state of the sealing element lies against a shaft sealing surface,
wherein the sealing lip (5) separates an inner space from an outer space,
wherein an activation element (9) is arranged on the sealing element in the outer space, so that a leak, in the event of the sealing lip (5) leaking, cooperates with the activation element (9), as a result of which a further sealing means can be applied passively against the shaft sealing surface,
**characterised in that**
the further sealing means is a further sealing lip (5), **in that**
the activation element (9) is arranged between the sealing lip (5) and a further sealing lip (5) and the activation element (9) lifts the further sealing lip (5) off from the shaft sealing surface,
the activation element (9) being a coating on the shaft sealing ring which is soluble in the lubricant, in particular oil-soluble.

7. A sealing element according to one of the preceding claims,
**characterised in that**
the activation means consists of silanised microparticles.

8. A sealing element according to one of the preceding claims,
**characterised in that**
the region of material and/or the coating is constructed from a plurality of different layers of material.

9. An arrangement for sealing a part against a shaft (2) with a sealing element according to one of Claims 1 to 8.

10. A casing (1), in particular a gear case, with a sealing element according to one of the preceding Claims 1 to 8.

11. A method for sealing off a shaft (2) through a lead-through in a casing wall of a casing (1),
wherein a sealing element according to one of Claims 1 to 8 is arranged between the shaft (2) and the casing (1) in a manner resistant to rotation relative to the casing (1), the sealing element having an inner side to a lubricant-filled inner space of the casing (1) and an outside located opposite the inner side,
wherein a sealing lip (5) of the sealing element cooperates in sealing manner with a sealing surface of the shaft (2),
**characterised in that**
an activation element (9) is arranged on the outside of the sealing element, with, in the event of a leakage of the sealing element, in particular of the sealing lip (5), a portion of a leak entering into an operative connection with the activation element (9), as a result of which the activation means applies a further sealing means passively against the shaft sealing surface.

12. A method according to Claim 11,
**characterised in that**
the activation means, preferably a lipophilic hydrophobic coating or a region of material, dissolves or swells up by contact with the leak.

## Revendications

1. Elément d'étanchéité pour un étanchement d'arbre, en particulier bague d'étanchéité d'arbre, comprenant une lèvre d'étanchéité (5) qui s'applique contre une surface d'étanchéité d'arbre dans un état installé de l'élément d'étanchéité,
sachant que la lèvre d'étanchéité (5) sépare un espace intérieur d'un espace extérieur, sachant qu'un élément d'activation (9) est disposé sur l'élément d'étanchéité dans l'espace extérieur, de sorte qu'une coulée en cas de défaut d'étanchéité de la lèvre d'étanchéité (5) coopère avec l'élément d'activation (9), de sorte qu'un moyen d'étanchéité supplémentaire peut être appliqué de manière passive contre la surface d'étanchéité d'arbre,
**caractérisé en ce que** l'élément d'activation (9) est un absorbeur hydrophobe et lipophile qui est disposé entre la surface d'étanchéité d'arbre et la bague d'étanchéité d'arbre et, par une augmentation du volume de l'absorbeur qui est produite par l'absorption d'une partie de la coulée dans l'absorbeur, le moyen d'étanchéité supplémentaire peut être et/ou est appliqué en étanchéité contre la surface d'étanchéité d'arbre,
sachant en particulier que l'élément d'activation (9) change sa couleur visible par l'absorption de la partie de la coulée, et que le moyen d'étanchéité supplémentaire est l'absorbeur lui-même,
sachant que l'absorbeur est disposé dans une région située entre la lèvre d'étanchéité (5) et une lèvre anti-poussière (6) de l'élément d'étanchéité, et que la lèvre anti-poussière (6) se décolle de la surface d'étanchéité d'arbre lors de l'augmentation de volume.

2. Elément d'étanchéité selon la revendication 1, **caractérisé en ce qu'**une lèvre d'étanchéité supplémentaire (5) est distante de la surface d'étanchéité d'arbre en tant que moyen d'étanchéité supplémentaire, et peut être pressée en étanchéité contre la surface d'étanchéité d'arbre par l'élément d'activation (9) lors de l'augmentation de volume.

3. Elément d'étanchéité selon l'une des revendications 1 à 2, **caractérisé en ce que** le moyen d'activation présente un élément filtrant siliconé ou silanisé, qui entoure un matériau gonflant lors de l'absorption d'au moins une quantité partielle de la coulée.

4. Elément d'étanchéité selon l'une des revendications précédentes, **caractérisé en ce que** l'augmentation de volume du moyen d'activation permet de produire une pression d'application accrue sur la lèvre anti-poussière (6) ou la lèvre d'étanchéité (5), ou une déviation correspondante, dirigée vers la surface d'étanchéité d'arbre, de la lèvre anti-poussière (6) ou de la lèvre d'étanchéité (5).

5. Elément d'étanchéité selon la revendication 4, **caractérisé en ce que** la lèvre anti-poussière (6) ou la lèvre d'étanchéité (5) empêche la poursuite de la sortie de la coulée par cette pression d'application accrue.

6. Elément d'étanchéité pour un étanchement d'arbre, en particulier bague d'étanchéité d'arbre, comprenant une lèvre d'étanchéité (5) qui s'applique contre une surface d'étanchéité d'arbre dans un état installé de l'élément d'étanchéité,
sachant que la lèvre d'étanchéité (5) sépare un espace intérieur d'un espace extérieur, sachant qu'un élément d'activation (9) est disposé sur l'élément d'étanchéité dans l'espace extérieur, de sorte qu'une coulée en cas de défaut d'étanchéité de la lèvre d'étanchéité (5) coopère avec l'élément d'activation (9), de sorte qu'un moyen d'étanchéité supplémentaire peut être appliqué de manière passive contre la surface d'étanchéité d'arbre,
**caractérisé en ce que** le moyen d'étanchéité supplémentaire est une lèvre d'étanchéité supplémentaire (5), et **en ce que** l'élément d'activation (9) est disposé entre la lèvre d'étanchéité (5) et une lèvre d'étanchéité supplémentaire (5), et l'élément d'activation (9) décolle la lèvre d'étanchéité supplémentaire (5) de la surface d'étanchéité d'arbre, sachant que l'élément d'activation (9) est un revêtement soluble dans le lubrifiant, en particulier soluble dans l'huile, sur la bague d'étanchéité d'arbre.

7. Elément d'étanchéité selon l'une des revendications précédentes, **caractérisé en ce que** le moyen d'activation est constitué de microparticules silanisées.

8. Elément d'étanchéité selon l'une des revendications précédentes, **caractérisé en ce que** la zone de matériau et/ou le revêtement est constitué de plusieurs couches différentes de matériau.

9. Agencement pour l'étanchement d'une pièce vis-à-vis d'un arbre (2) avec un élément d'étanchéité selon l'une des revendications 1 à 8.

10. Carter (1), en particulier carter de transmission, avec un élément d'étanchéité selon l'une des revendications précédentes 1 à 8.

11. Procédé pour l'étanchement d'un arbre (2) par une traversée d'une paroi de carter d'un carter (1),
sachant qu'un élément d'étanchéité selon l'une des revendications 1 à 8 est disposé entre l'arbre (2) et le carter (1) en étant fixé en rotation par rapport au carter (1),
et que l'élément d'étanchéité présente un côté intérieur vers un espace intérieur du carter (1) rempli de lubrifiant, et un côté extérieur opposé au côté intérieur,
sachant qu'une lèvre d'étanchéité (5) de l'élément d'étanchéité coopère en étanchéité avec une surface d'étanchéité de l'arbre (2),
**caractérisé en ce qu'**un élément d'activation (9) est disposé sur l'élément d'étanchéité sur le côté extérieur,
sachant qu'en cas de fuite de l'élément d'étanchéité, en particulier de la lèvre d'étanchéité (5), une partie de la coulée entre en liaison fonctionnelle avec l'élément d'activation (9),
de sorte que le moyen d'activation applique un moyen d'étanchéité supplémentaire de manière passive contre la surface d'étanchéité d'arbre.

12. Procédé selon la revendication 11, **caractérisé en ce que** le moyen d'activation, de préférence une zone de matériau ou un revêtement hydrophobe et lipophile, se désagrège ou gonfle par contact avec la coulée.
